Europäisches Patentamt

European Patent Office

Office européen des brevets

(11) Publication number: **0 520 395 A1**

# EUROPEAN PATENT APPLICATION

(21) Application number: **92110607.6**

(22) Date of filing: **24.06.92**

(51) Int. Cl.5: **G01B 9/02**

(30) Priority: **25.06.91 JP 180259/91**

(43) Date of publication of application:
**30.12.92 Bulletin 92/53**

(84) Designated Contracting States:
**DE GB**

(71) Applicant: **CANON KABUSHIKI KAISHA**
**30-2, 3-chome, Shimomaruko, Ohta-ku**
**Tokyo(JP)**

(72) Inventor: **Ohtsuka, Masaru, c/o Canon**
**Kabushiki Kaisha**
**30-2, 3-chome, Shimomaruko**
**Ohta-ku, Tokyo 146(JP)**

(74) Representative: **Tiedtke, Harro, Dipl.-Ing.**
**Patentanwaltsbüro Tiedtke-Bühling-Kinne-**
**Grupe-Pellmann-Grams Bavariaring 4**
**Postfach 20 24 03**
**W-8000 München 2(DE)**

(54) **Optical heterodyne interference apparatus.**

(57) An optical heterodyne interference apparatus has light producing means producing a first light and a second light differing in frequency from each other, a beam splitter for directing the first light to an object to be measured and directing the second light to a reference surface, and combining the first light and the second light passed through the object to be measured and the reference surface, respectively, detecting means for obtaining a beat signal on the basis of the combined lights, and optical means provided in the optical path from the light producing means so as to extinguish one of the first light and the second light and direct the other light to the object to be measured and the reference surface.

FIG. 2

EP 0 520 395 A1

## BACKGROUND OF THE INVENTION

### Field of the Invention

This invention relates to an optical heterodyne interference apparatus, and particularly to an optical heterodyne interference apparatus designed to measure, for example, the shape of an object to be measured such as an optical lens or a mirror by detecting any variation in the optical phase of an incident light wave which accompanies said shape.

### Related Background Art

An optical heterodyne interference apparatus is known as an apparatus which can measure the shapes of optical members such as lenses and mirrors relatively highly accurately by the utilization of light wave interference. Such apparatus is introduced, for example, in U.S. Patent No. 4,188,122 and Applied Optics, Vol. 19, No. 1 (1980), pp. 154 - 160.

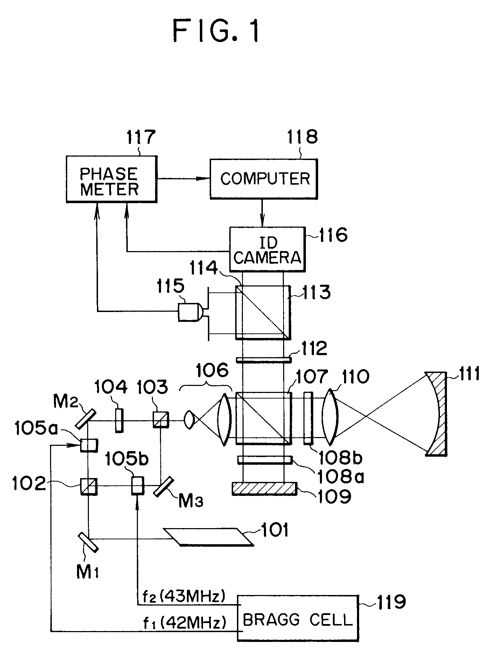

Figure 1 of the accompanying drawings is a schematic diagram of the essential portions of the optical system of an optical heterodyne interference apparatus according to the prior art.

In Figure 1, a light wave emitted from a laser 101 such as a Kr ion laser is reflected by a mirror M1, and is divided into reflected light and transmitted light by a beam splitter 102. The transmitted light (a first light wave) passes a bragg cell 105a, a mirror M2 and a halfwave plate 104, and the reflected light (a second light wave) passes a bragg cell 105b and a mirror M3, whereafter they are combined by a beam splitter 103.

At this time, the first light wave which has passed through the bragg cell 105a is subjected to frequency shift of frequency f1, and passes through the halfwave plate 104 and has its plane of polarization rotated by 90°. Also, the second light wave which has passed through the bragg cell 105b is subjected to frequency shift of frequency f2.

These light waves, after combined by the beam splitter 103, have their beam diameters expanded by a beam expander 106 and enter a polarizing beam splitter 107. Of these light waves, the first light wave of frequency f1 passes through the polarizing beam splitter 107, is made into circularly polarized light by a quarterwave plate 108b, and passes through a collimator lens 110 to an object to be measured 111. Then, a detected light wave (a measuring light wave) reflected by the object to be measured 111 returns along the original optical path. At this time, the light wave when it re-enters the quarter wavelength plate 108b, as compared with the time when it has first entered the quarter wavelength plate, becomes circularly polarized light in the opposite direction because it has been reflected by the object to be measured 111 and therefore, the direction of polarization (the plane of polarization) of said light wave when it has passed through the quarterwave plate 108b is displaced by 90° as compared with the time when it has entered the quarter wavelength plate. Therefore, this light wave is now reflected by the polarizing beam splitter 107.

On the other hand, the second light wave of frequency f2 is reflected by the polarizing beam splitter 107 and is made into circularly polarized light by a quarterwave plate 108a, and a reference light wave reflected by a reference plane mirror 109 becomes circularly polarized light in the opposite direction and returns along the original optical path. Then it passes through the quarterwave plate 108a and becomes linearly polarized light whose direction of polarization (plane of polarization) has been displaced by 90° as compared with the time when it has entered this quarterwave plate, and it now passes through the polarizing beam splitter 107 and is synthesized with the aforementioned detected light wave.

The two light waves, i.e., the detected light wave and reference light wave synthesized again here, pass through a polarizing plate 112 comprising a linearly polarizing element, whereby they are made to interfere with each other as wavefront capable of interfering with each other. Then the interference light waves are detected as a heterodyne signal (a beat signal) of frequency shift difference f1 - f2 by a photodetector 115 and an image detecting camera 116, respectively.

The image detecting camera 116 is a camera capable of selecting any one point on a two-dimensional image by a command from a computer 118, and detecting the intensity signal of the light incident on that point, on real time.

Assuming that the reference plane mirror 109 is an ideal plane, the phase distribution of the heterodyne signal f1 - f2 in Figure 1 directly represents the error of the shape of the object to be measured 111 from a spherical wave made by the collimator lens 110.

That is, the phase distribution $\phi(x, y)$ based on the shape of the object to be measured 111 at this time represents the shape error distribution $\epsilon(x, y)$ of the object to be measured 111, and the relation therebetween is expressed by the following equation:

$$\epsilon(x, y) = \phi(x, y) \cdot \lambda/4\pi \qquad (1)$$

where $\lambda$ is the wavelength of the measuring light.

So, with the heterodyne signal obtained by the photodetector 115 as a reference signal R and with each signal from the image detecting camera 116 as a measuring signal S, the phase difference $\phi$ between the reference signal R and the measuring signal S is detected by a phase meter 117. Further, each measuring point on the image detecting camera 116 is two-dimensionally scanned by a command from a computer 118, thereby finding the two-dimensional distribution of the phase difference $\phi(x, y)$ between the measuring signal S and the reference signal R at each measuring point. Thereby, the phase distribution $\epsilon(x, y)$ based on the shape of the object to be measured 111 is detected. If for example, in equation (1), electrical phase measurement is effected with the accuracy of the order of 1 degree, the distribution of the shape error can be detected with the accuracy of nm or less.

Generally in a light wave interferometer, it is necessary that the alignment of the reference surface and the surface to be measured be effected precisely. Therefore, in many cases, the alignment of these two surfaces is effected while the interference fringe by the interference between the light beam from the reference surface and the light beam from the surface to be measured is seen.

In an optical heterodyne interference apparatus, however, the interference fringe is vibrating at a very high speed on the surface of detecting means and therefore, the interference fringe cannot be seen. Therefore, to visualize the interference fringe, some means or other becomes necessary. In the aforedescribed optical heterodyne interference apparatus according to the prior art, the frequencies of RF signals provided to two Bragg cells are made equal to each other, whereby an interference fringe is made stationary as a light beam of a single frequnncy and this interference fringe is observed.

In this method, however, there has been encountered the problem that the laser which is light source means cannot be used as Zeeman laser oscillating two frequencies and in the manner of use in which only one Bragg cell is used to obtain lights of two frequencies, if the inputting of the RF signal of the Bragg cell is stopped, diffraction will no longer occur and the alignment of laser lights will be destroyed.

## SUMMARY OF THE INVENTION

The present invention has as its object the provision of an optical heterodyne interference apparatus in which optical means having a predetermined optical function is removably provided in the optical path between light source means and a polarizing beam splitter, whereby an interference fringe for effecting the alignment of a reference surface and a surface to be measured easily and well can be observed on a predetermined surface.

The optical heterodyne interference apparatus of the present invention is characterized in that one of a first light wave and a second light wave emitted from the light source means and differing in frequency from each other is caused to enter an object to be measured through a polarizing beam splitter to thereby obtain a measuring light wave and the other light wave is passed through the reference surface to thereby obtain a reference light wave, whereafter the two light waves are combined by said polarizing beam splitter and beat signals are obtained from an interference light wave based on said combined light waves, and one of the beat signals is detected by first detecting means and the other beat signal is detected by second detecting means, and optical means designed to enable an interference fringe to be observed on a predetermined surface when any variation in the optical phase of said measuring light wave is detected by the utilization of signals obtained by said first and second detecting means is removably provided in the optical path between said light source means and said polarizing beam splitter.

The optical heterodyne interference apparatus of the present invention is further characterized in that said optical means have the optical function of passing therethrough only one of the first light wave and the second light wave emitted from said light source means and differing in frequency from each other, said optical means has a polarizing beam splitter or a polarizing plate, interference fringe observation means designed to observe the interference fringe therethrough by the use of said interference light wave is provided in the optical path of said interference light wave, and a light directing member for directing said interference light wave to said interference fringe observation means is inserted into the optical path in synchronism with the insertion of said optical means into the optical path.

## BRIEF DESCRIPTION OF THE DRAWINGS

Figure 1 is a schematic diagram of a heterodyne interference apparatus according to the prior art.

Figure 2 is a schematic diagram of the essential portions of an embodiment of the present invention.

Figure 3 is a schematic diagram of the essential portions of another embodiment of the present invention.

## DESCRIPTION OF THE PREFERRED EMBODIMENTS

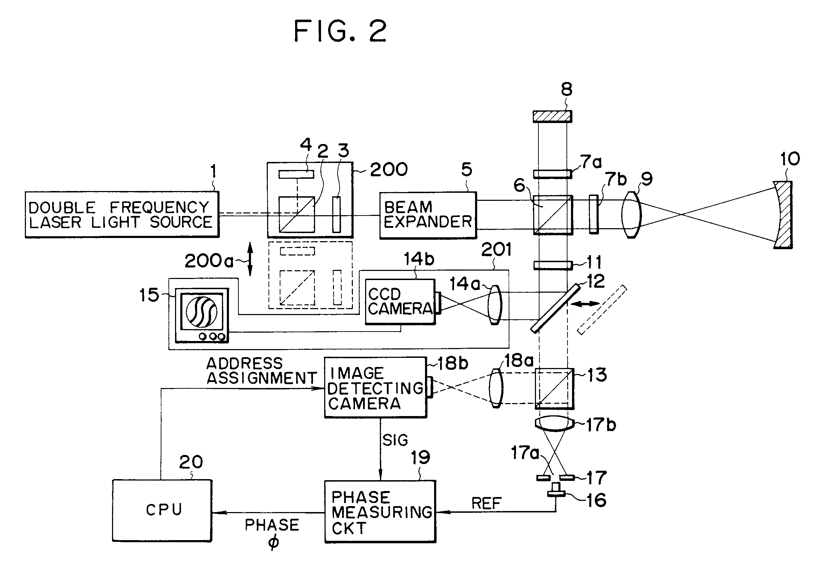

Figure 2 is a schematic diagram of the essential portions of an embodiment of the present invention.

This embodiment differs from the optical heterodyne interference apparatus according to the prior art shown in Figure 1 in that optical means 200 for enabling an interference fringe to be observed is provided between light source means 1 and a polarizing beam splitter 6 and that interference fringe observation means 201 is disposed in the optical path between a polarizing plate 11 and a beam splitter 13. In the other points, this embodiment is substantially the same as the apparatus of Figure 1.

The features of the present invention will now be described with reference to Figure 2 although the following description will partly overlap with the description of Figure 1. The reference numeral 1 designates light source means which comprises a double frequency laser such as a Zeeman laser and which emits coherent first light wave (frequency f1) and second light wave (frequency f2) slightly differing in the frequencies of linearly polarized lights orthogonal to each other.

The reference numeral 200 denotes optical means removably inserted in the optical path as indicated by arrow 200a to enable an interference fringe to be observed on a predetermined surface as will be described later. The optical means 200 is disposed in the optical path only when an interference fringe is observed. The optical means 200 has a polarizing beam splitter 2 for selecting only one of two polarized components orthogonal to each other and transmitting it therethrough, a halfwave plate 3 for changing the direction of polarization of the transmitted light and adjusting the transmitted light so that a suitable quantity of light may be distributed to two systems, i.e., a measuring system and a reference system, by a polarizing beam splitter 6 which will be described later, and an absorber 4 for absorbing the other light which is not transmitted through the polarizing beam splitter 2.

The reference numeral 5 designates a beam expander which expands the diameter of the incident light beam and causes the incident light beam to emerge therefrom. The reference numeral 6 denotes a polarizing beam splitter which reflects or transmits therethrough the incident light beam in conformity with its polarized state and changes the direction of travel of the light. The reference characters 7a and 7b designate quarterwave plates which rotate the plane of polarization of the incident light beam by 45° and cause the light to emerge therefrom. The reference numeral 8 denotes a reference plane mirror which forms a reference wave surface. The reference numeral 9 designates a collimator lens which converges the incident light beam and causes it to enter an object to be measured 10 which will be described later. The object to be measured 10 comprises a mirror, a lens or the like, and the apparatus of the present embodiment is used to detect their three-dimensional shapes, the uniformity of their materials, etc.

The reference numeral 11 denotes a polarizing plates for extracting particular polarized components from a light wave having two linearly polarized components orthogonal to each other and causing them to interfere with each other. The polarizing plate 11 is disposed with its polarization axis inclined by e.g. 45°. The reference numeral 12 designates a mirror which is removably provided in the optical path in synchronism with the insertion of the optical means 200 and which directs the light beam from the polarizing plate 11 to interference fringe observation means 201 which will be described later.

The interference fringe observation means 201 has an imaging lens 14a for imaging the light beam from the mirror 12, a CCD camera 14b and a TV monitor 15 for observing an interference fringe.

The reference numeral 13 denotes a beam splitter which divides the incident light beam into two light beams, i.e., reflected light and transmitted light. The reference character 17b designates a converging lens, and the reference numeral 17 denotes a pinhole plate having a pinhole 17a for transmitting therethrough a light beam incident on a particular location.

The reference numeral 16 designates first detecting means which obtains a reference signal from beat signals based on the interference light wave from the beam splitter 13. The reference character 18a denotes a converging lens which images the interference light wave from the beam splitter 13 on second detecting means 18b. The second detecting means 18b comprises an image detecting camera and reads out on real time the light signal of a position address-designated by a computer 20. The reference numeral 19 designates phase detecting means (a phase measuring circuit) which detects the phase difference between two signals input thereto from the first detecting means 16 and the second detecting means 18b. The computer 20 calculates and finds the shape of the object to be measured 10 on the basis of a signal from the phase measuring circuit 19.

In the present embodiment, when the alignment of the reference plane mirror 8 and the object to be measured 10 is to be effected while the interference fringe is observed, the optical means 200 and the mirror 12 are inserted into the optical path as indicated by solid lines.

In such a construction, of the linearly polarized first light wave and second light wave orthogonal to each other and differing in frequency from each other which are emitted from the light source means 1, only the light of one frequency component is selected and made to travel rectilinearly by the polarizing beam splitter 2 of the optical means 200. The other light is bent and absorbed by the absorber 4. The rectilinearly travelling light is converted by the action of the halfwave plate 3 into light having its angle of polarization inclined by e.g. about 45° from the original linearly polarized light, has its diameter expanded by the beam expander 5 and thereafter is made to enter the polarizing beam splitter 6.

The light which has entered the polarizing beam splitter 6 is divided into two linearly polarized lights orthogonal to each other, and one of these two linearly polarized lights travels toward the reference plane mirror 8 and the other travels toward the object to be measured 10, and they reciprocate through the quarterwave plates 7a and 7b, respectively, whereby they return to the polarizing beam splitter 6 with their angles of polarization rotated by 90° and both of them enter the polarizing plate 11. Since the polarizing plate 11 has its axis of polarization inclined by e.g. about 45°, the two lights interfere with each other and thus, an interference fringe becomes observed, is reflected by the mirror 12 inclined at 45°, is directed to the CCD camera 14 by the imaging lens 14a and is observed by means of the TV monitor 15. By the then interference fringe being observed, the alignment of the reference plane mirror 8 and the object to be measured 10 is effected.

In the present embodiment, without the interference fringe observation device 201 being used, an interference fringe may be formed on the surface of the first detecting means or the second detecting means and the alignment of the reference plane mirror and the object to be measured may be effected while the then interference fringe is observed.

In the present embodiment, in this state, the reference plane mirror 8 or the object to be measured 10 is suitably aligned and is adjusted so that the interference fringe can be observed roughly enough, whereafter the optical means 200 and the mirror 12 are removed from the optical path, thereby bringing about the same optical heterodyne interference apparatus as the conventional one.

Description will now be made of a case where in the present embodiment, after the alignment of the mirror 8 and the object to be measured 10 is terminated, the shape of the object to be measured 10 is measured by the optical heterodyne interference apparatus. The measuring method is substantially similar to that by the conventional optical heterodyne interference apparatus.

That is, two light beams, i.e., the linearly polarized first light wave (frequency f1) and second light wave (frequency f2) differing in frequency from each other and having their directions of polarization orthogonal to each other which are emitted from the light source means 1 are made to enter the beam expander 5. The diameters of the light beams are expanded by the beam expander 5 and the light beams are made to enter the polarizing beam splitter 6. Of these light beams, the first light wave of frequency f1 passes through the polarizing beam splitter 6, is made into circularly polarized light by the quarterwave plate 7b, and passes through the collimator lens 9 to the object to be measured 10. The detected wavefront reflected by the object to be measured 10 returns along the original optical path. At this time, the light wave when it re-enters the quarterwave plate 7b becomes circularly polarized light in the opposite direction as compared with that when it has entered the quarterwave plate 7b, because it has been reflected by the object to be measured 10 and therefore, the direction of polarization (the plane of polarization) when said light wave has passed through the quarterwave plate 7b is displaced by 90° as compared with the time when it has entered the quarterwave plate 7b. Therefore, said light wave is now reflected by the polarized beam splitter 6.

On the other hand, the second light wave of frequency f2 is reflected by the polarizing beam splitter 6 and is made into circularly polarized light by the quarterwave plate 7a, and the reference wavefront reflected by the reference plane mirror 8 becomes circularly polarized light in the opposite direction and returns along the original optical path. It then passes through the quarterwave plate 7a and becomes linearly polarized light having its direction of polarization (its plane of polarization) displaced by 90° relative to that when it has entered the quarterwave plate 7a, and now passes through the polarizing beam splitter 6 and is synthesized with the previously described detected wavefront.

The two light waves combined again here, i.e., the detected wavefront and the reference wavefront, pass through the polarizing plate 11, whereby they are made to interfere with each other as wavefronts which can interfere with each other. The two interference light waves at this time are detected as a heterodyne signal (beat signal) of a frequency shift difference f1 - f2 by the first detecting means 16 and the second detecting means 18b, respectively.

The phase distribution of the heterodyne signal f1 - f2 in the present embodiment, if it is assumed that the reference plane mirror 8 is an ideal plane, directly represents the error of the shape of the object to be measured 10 from the spherical wave made by the collimator lens 9.

So, for example, with the heterodyne signal obtained from the first detecting means 16 as a reference signal R and with each signal from the second detecting means 18b as a measuring signal S, the phase difference $\phi a$ between the reference signal R and the measuring signal S is detected by the phase measuring circuit 19.

Further, each measuring point on the second detecting means 18b is two-dimensionally scanned by a command from the computer 20 to find the two-dimensional distribution of the phase difference $\phi_{x, y}$ between the measuring signal S and the reference signal R at each measuring point. Thereby the error of the shape of the entire object to be measured 10 is measured.

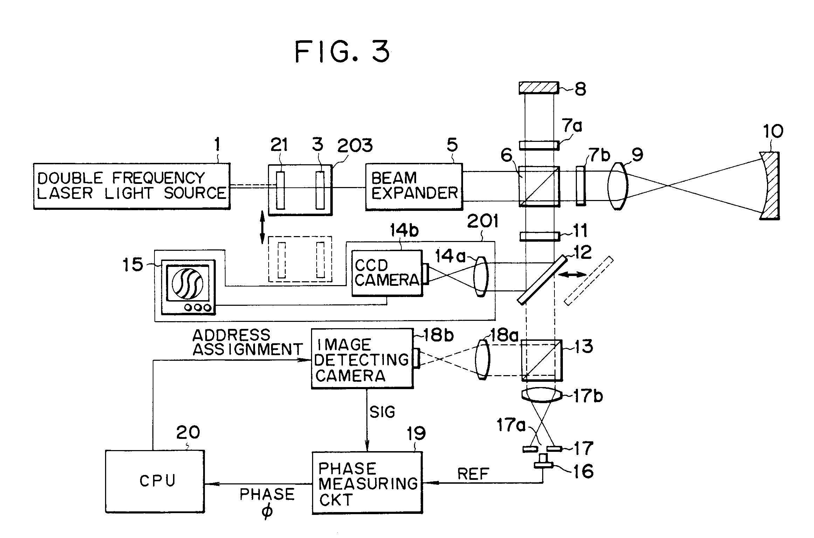

Figure 3 is a schematic diagram of the essential portions of another embodiment of the present invention. This embodiment differs from the embodiment of Figure 2 in that a polarizing plate 21 is used instead of the polarizing beam splitter 2 constituting the optical means and that the absorber 4 is eliminated. In the other points, this embodiment is substantially the same as the previous embodiment.

That is, in the present embodiment, optical means 201 is disposed in the optical path and only one of linearly polarized first and second light waves orthogonal to each other is passed through the polarizing plate 21 of the optical means 201.

Thus, the alignment of the reference plane mirror 8 and the object to be measured 10 is effected while the interference fringe by the lights from the reference plane mirror 8 and the object to be measured 10 is observed by means of the TV monitor 15 as in the previous embodiment.

Again in the present embodiment, without the interference fringe observation device 201 being used, an interference fringe may be formed on the surface of the first detecting means or the second detecting means and the alignment of the reference plane mirror and the object to be measured may be effected while the interference fringe is observed.

Also, it is often the case that when the interference fringe is observed, the reflectance of the reference plane mirror 8 and the reflectance of the object to be measured 10 differ from each other. This brings about the situation that the contrast of the interference fringe to be observed is low and the interference fringe cannot be clearly observed.

To overcome this, the inclination of the optical axis of the halfwave plate 3 in each embodiment can be adjusted. For example, when the reflectance of the object to be measured 10 is low as compared with that of the reference plane mirror 8, the optical axis of the halfwave plate 3 can be inclined so that the quantity of light directed to the object to be measured 10 may be increased by the polarizing beam splitter 6.

The present invention can of course be also applied to the example of the prior art shown in Figure 1.

According to the present invention, there can be achieved an optical heterodyne interference apparatus in which optical means having the optical property as previously described is removably provided in the optical path between light source means and a polarizing beam splitter, whereby the alignment of a reference plane mirror and an object to be measured can be accomplished easily and well white an interference fringe is observed.

Particularly, in the present invention, even if any double frequency light source means is used, the interference fringe becomes observable to thereby facilitate the alignment of the object to be measured as in an ordinary interference apparatus, and by the optical means being removably provided in the optical path, the optical means can be removed from the optical path after the completion of the alignment, thereby making highly accurate heterodyne measurement possible.

The present invention is further characterized in that a camera exclusively for the observation of the interference fringe is provided and as previously described, the optical means and the mirror are removably inserted into the optical path, whereby the observation of the interference fringe with an excellent quality of image and highly accurate heterodyne phase measurement can be changed over smoothly without any loss of light.

An optical heterodyne interference apparatus has light producing means producing a first light and a second light differing in frequency from each other, a beam splitter for directing the first light to an object to be measured and directing the second light to a reference surface, and combining the first light and the second light passed through the object to be measured and the reference surface, respectively, detecting means for obtaining a beat signal on the basis of the combined lights, and optical means provided in the optical path from the light producing means so as to extinguish one of the first light and the second light and direct the other light to the object to be measured and the reference surface.

## Claims

1. An optical heterodyne interference apparatus having:

   light producing means producing a first light and a second light differing in frequency from each other;

   a beam splitter for directing said first light to an object to be measured and directing said second light to a reference surface, and combining said first light and said second light passed through said object to be measured and said reference surface, respectively;

detecting means for obtaining a beat signal on the basis of said combined lights; and

optical means provided in the optical path from said light producing means so as to extinguish one of said first light and said second light and direct the other light to said object to be measured and said reference surface.

2. An optical heterodyne interference apparatus according to Claim 1, wherein said optical means has a polarizing beam splitter or a polarizing plate.

3. An optical heterodyne interference apparatus according to Claim 1, wherein said optical means has a halfwave plate to direct said other light to said object to be measured and said reference surface.

4. An optical heterodyne interference apparatus according to Claim 1, wherein said optical means is removable.

5. An optical heterodyne interference apparatus according to Claim 4, wherein interference fringe observation means is inserted between said beam splitter and said detecting means when said optical means is inserted.

6. An optical heterodyne interference apparatus having:

light producing means producing a first light and a second light differing in frequency from each other;

a beam splitter for directing said first light to an object to be measured and directing said second light to a reference surface, and combining said first light and said second light passed through said object to be measured and said reference surface, respectively;

detecting means for dividing said combined lights into two directions and obtaining a first beat signal and a second beat signal by a first detector and a second detector, respectively, any variation in the optical phase of said first light passed through said object to be measured being detected from said first beat signal and said second beat signal; and

optical means provided in the optical path from said light producing means so as to extinguish one of said first light and said second light and direct the other light to said object to be measured and said reference surface.

7. An alignment method for an optical heterodyne interference apparatus having the steps of:

producing a first light and a second light differing in frequency from each other;

selecting one of said first light and said second light;

separating said selected one light and directing it to a reference surface and an object to be measured;

combining the lights passed through said reference surface and said object to be measured, respectively; and

observing the interference fringe of said combined lights.

# FIG. 1

# FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-8 905 956 (SNYDER, JAMES)<br>* page 17, paragraph 2 - page 18, paragraph 2; figures 4A,4B *<br>--- | 1,4,6 | G01B9/02 |
| Y,P | EP-A-0 467 343 (CANON KABUSHIKI KAISHA)<br>* the whole document *<br><br>----- | 1,4,6 | |
| | | | TECHNICAL FIELDS SEARCHED (Int. Cl.5) |
| | | | G01B<br>G01J |

The present search report has been drawn up for all claims

| Place of search | Date of completion of the search | Examiner |
|---|---|---|
| THE HAGUE | 22 SEPTEMBER 1992 | PANDOLFI C. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)